# EUROPEAN PATENT SPECIFICATION

(11) **EP 2 504 634 B1**
(45) Date of publication and mention of the grant of the patent: **09.04.2014**
(21) Application number: 10807724.9
(22) Date of filing: 23.11.2010
(51) Int. Cl.: F24J 2/24, F24J 2/52, B64G 1/44, H01L 31/042, F24J 2/14

(54) **EXPANDABLE SOLAR COLLECTOR**
EXPANDIERBARER SONNENKOLLEKTOR
COLLECTEUR SOLAIRE EXTENSIBLE

(30) Priority: 25.11.2009 IT TO20090914
(43) Date of publication of application: 03.10.2012
(73) Proprietor: Piccione, Gabriella, 37045 Legnago (Verona) (IT); Zambon, Marta, 35126 Padova (IT)
(72) Inventor: ZAMBON, Marta, I-35126 Padova (IT)
(74) Representative: Notaro, Giancarlo
(86) International application number: PCT/IB2010/055361
(87) International publication number: WO 2011/064715

(56) References cited:
- EP-A1- 0 220 971
- EP-A1- 1 593 597
- EP-A2- 0 106 270
- US-A- 3 913 109
- US-A- 4 051 834
- US-A- 5 496 414
- US-A- 6 111 190

## Description

### Field of the invention

The present invention refers to a solar collector comprising:
- a deformable tubular body including a transparent portion and a reflecting portion and deformable from a contracted position to at least one deployed position,
- support means adapted to receive a solar absorber device, and
- a support structure inserted in the deformable tubular body.

### Description of the prior art

Various types of devices exploiting different technologies are known in the field of the conversion of solar energy into thermal or electric energy.

In particular, one of them is that of the so-called concentration systems, which comprises devices based on the non-imaging optics laws and which exploit reflecting surfaces capable of concentrating energy in a predetermined region of the space, for example corresponding to a focal line of a reflector having a parabolic profile or the like.

Such devices have several advantageous characteristic, firstly the wide range of structures they can be made of.

Among these structures, inflatable structures -to which a desired shape can be imparted through any support means and air or any other gas under pressure - are particularly important relating to the present invention.

Document US 4,051,834 illustrates a portable solar collector having a linear absorber on which the light radiation energy coming from the sun is concentrated and having an inflatable structure which allows the transport thereof with small overall dimensions and the subsequent deployment on the field. Document EP0220971 A1 illustrates another portable solar collector.

However, the use of the inflatable structure requires having suitable inflation equipment, such as for example compressors or pressurised gas cylinders, at disposal, which renders objectively disadvantageous the use of inflatable structure solar collectors in sectors such as sports and hobby equipment, for example camping equipment, which generally require that deployment of any equipment on the field occurs very quickly.

However, it should be observed that the examples of solar collectors available in the prior art are often associated to actuator devices providing a movement thereof aimed at tracking the sun over the day. This makes the deployment thereof on the field indisputably complex and correct operation thereof costly.

### Object of the invention

The object of the present invention is that of overcoming the prior art drawbacks. In particular, the object of the present invention is to provide a solar collector that can be transported easily, deployed on the field in a manner that is simple, quick and without requiring further equipment.

### Summary of the invention

The object of the present invention is attained by a solar collector having the characteristics forming the subject of the claims that follow, which form an integral part of the technical disclosure herein provided in relation to the invention.

In particular, the object is attained by a solar collector having the characteristics listed at the beginning of the present description and wherein, in addition, the support structure comprises a wire-like element which is helically wound in a plurality of turns and it is fixed to the deformable tubular body. The support structure is also deformable from a collapsed position associated to the contracted position of the deformable tubular body and an extended position associated to the deployed position of the abovementioned tubular body and the wire-like element which is helically wound is elastically biased towards said extended position.

### Brief description of the drawings

The invention will now be described with reference to the attached drawings, provided purely by way of non-limiting example, wherein:
- figure 1 is a partly sectioned perspective view of a solar collector according to the present invention and a solar absorber device couplable therewith,
- figure 2 is a perspective view of a component of the solar collector of figure 1,
- figure 3 is a perspective view of the component of figure 2 to which the absorber device of figure 1 is coupled,
- figure 3A is a perspective view equivalent to figure 3 but illustrating a variant of the component of figure 2,
- figure 4 is a view according to the arrow IV of figure 1,
- figure 5 illustrates a first embodiment of the absorber device of figure 1,
- figure 6 illustrates a second embodiment of the absorber device of figure 1,
- figure 7 illustrates a third embodiment of the absorber device of figure 1,
- figures 8, 8A, 8B illustrate a collapsing/deployment sequence of the solar collector of figure 1,
- figures 9, 10 illustrate variants of the solar collector of figure 1.
- figure 11 illustrates a further variant of the solar collector of figure 1,
- figure 12 is a sectional view according to the line XII-XII of figure 11,

### Detailed description of the invention

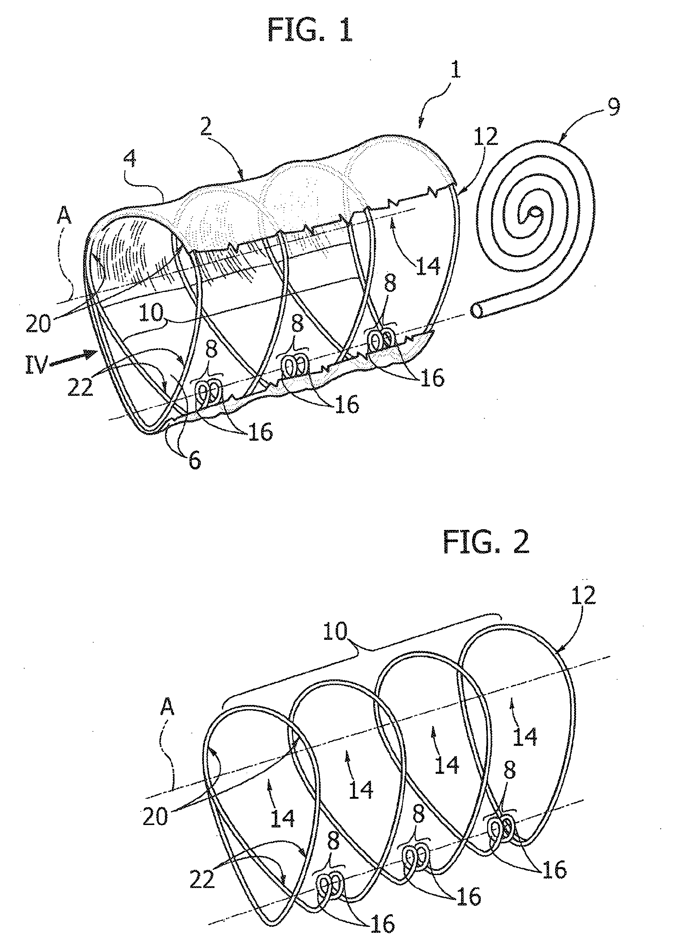

A solar collector according to the present invention is indicated with 1 in figure 1. The solar collector 1 comprises a deformable tubular body 2 including a transparent portion 4 and an internally reflecting portion 6.

The solar collector 1 further comprises support means 8 adapted to receive a solar absorber device 9 and a support structure 10 inserted in the deformable tubular body 2. Generally, the support means 8 define a passage within which the solar absorber device 9 can be housed.

In a preferred embodiment the tubular body 2 is made of polymeric material and comprises two different types of polymers/copolymers respectively for the transparent portion 4 and the reflecting portion 6.

With reference to figures 1, 2, 3, the support structure 10 comprises a wire-like element 12 fixed to the deformable tubular body 2 and which is helically wound around an axis A in a plurality of turns 14 to which the support means 8 are alternated. In this embodiment the wire-like element 12 defines the abovementioned support means, which comprise turns with reduced diameter 16 arranged coaxial to each other in pairs and located in proximity of the internally reflecting portion 6. The solar absorber device 9 is inserted in the sequence of turns with reduced diameter 16, which define the abovementioned passage characterising the support means 8.

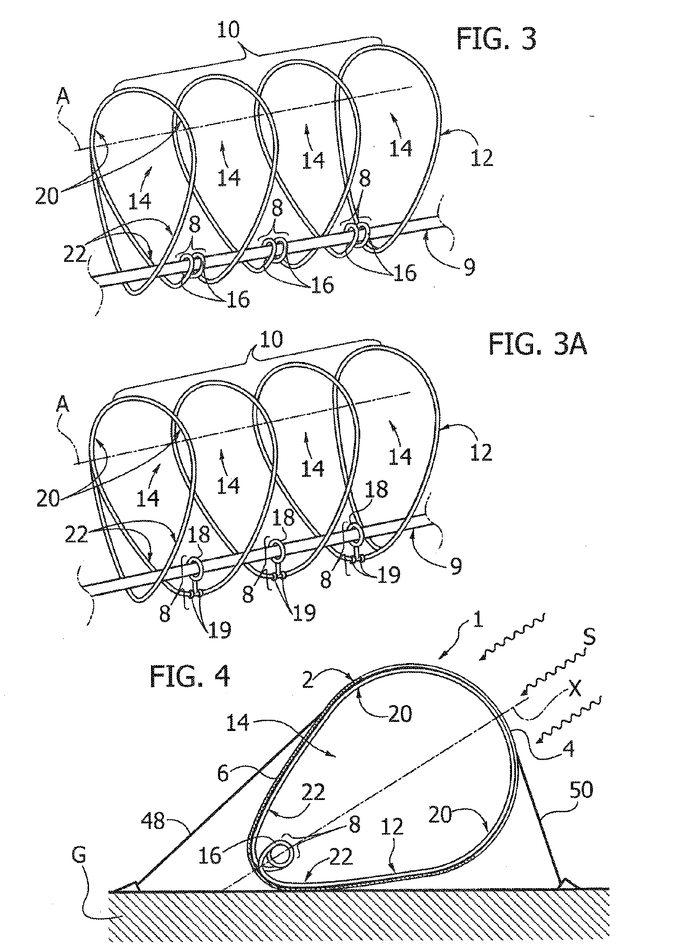

In an advantageous variant illustrated in figure 3A the support structure 10 comprises the wire-like element 12 which is helically wound in a plurality of turns 14 however without having the turns with reduced diameter 16, which are replaced by a plurality of eyelets 18 coaxial to each other and fixed to the turns 14, for example by means of clamping collars 19, and located in proximity of the internally reflecting portion 6. The solar absorber device 9 is received in the eyelets 18.

The support structure 10 can be, generally, made using a wire-like element 12 having solid or hollow sections depending on the structural and functional requirements of the solar collector 1. The turns 14 of the support structure 10 are preferably wound according to a variable curvature profile.

With particular reference in particular to figure 4, each turn 14 comprises a first circular stretch 20 associated to the transparent portion 4 and a second stretch 22 having a parabolic profile symmetric with respect to an axis X thereof and associated to the internally reflecting portion 6.

Furthermore, it should be observed that the support structure 10 may comprise a wire-like element wound on a conventional cylindrical helical profile, possibly deformed through mechanical means to obtain the profile illustrated in figure 4 when deploying the solar collector 1.

The solar absorber 9 which is received on the support means 8, whether the turns with reduced diameter 16, the eyelets 18 or any other equivalent structure, and comprises, generally, a body elongated in a longitudinal direction of the tubular body 2 and deformable therewith.

Regarding the present description, it is assumed as longitudinal direction any direction parallel to the axis A around which the turns 14 are wound and consequently any direction orthogonal to the axis A is transverse.

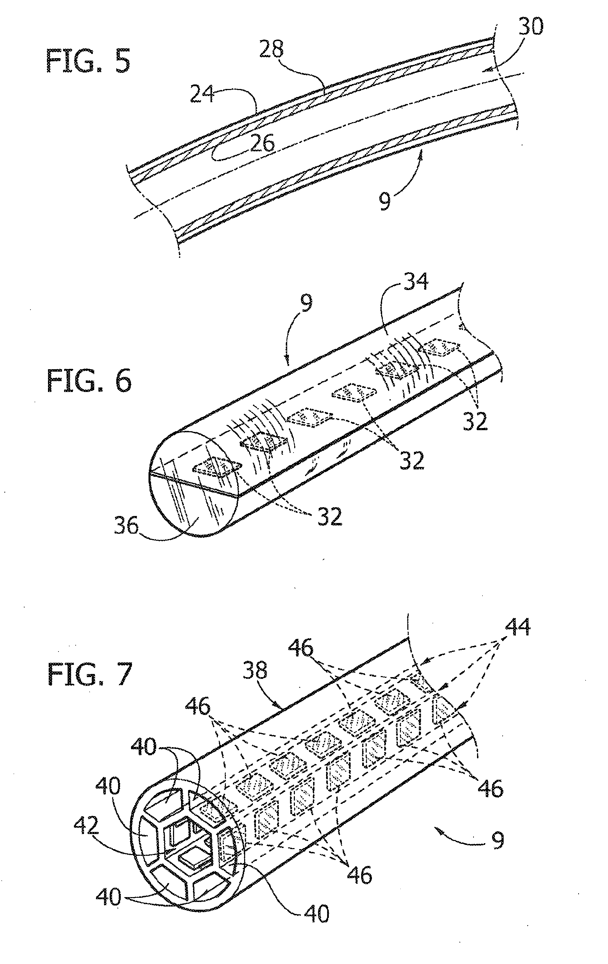

Some embodiments of the absorber device 9 are illustrated in figures 5, 6, 7.

In the embodiment illustrated in figure 5, the solar absorber device 9 is a flexible multilayer tubular element including a transparent outer polymeric layer 24, an inner layer 26 preferably made of aluminium and a selective absorption coating 28 interposed between the transparent outer polymeric layer 24 and the inner layer 26.

The inner layer 26 further defines a channel 30 adapted to contain water or other fluid.

The solar absorber 9 in the embodiment illustrated in figure 6 comprises a plurality of photovoltaic cells 32 arranged in an array and interposed, preferably co-moulded, between two extruded hemi-cylinders 34, 36 made of flexible and transparent polymeric material. A pair of arrays of photovoltaic cells 32 opposite to each other can also be provided.

In the embodiment of figure 7, the absorber device 9 comprises a flexible tubular element 38 having an interior subdivided into a crown of parallel channels 40 isolated from each other, in which the crown of parallel channels 40 defines a further central channel 42, in this embodiment having hexagonal section. Each of the parallel channels 40 is adapted to contain water or other fluid, while the central channel 42, electrically insulated by the channels 40, contains a plurality of arrays 44 of photovoltaic cells 46. Each array 44 is arranged inside the channel 42 on a respective wall thereof.

Regardless of the illustrated embodiment, the solar absorber device 9 is received by the support means 8 (whether the turns with reduced diameter 16 or the eyelets 18) within the collector 1 in proximity of the internally reflecting portion 6 and it is deformable with the collector 1, as will be described in the following. The absorber device 9 is also locked onto the support means 8 through mechanical means or by the support means 8 itself, particularly in the case where the latter are the turns with reduced diameter 16.

The solar collector 1 operates as follows.

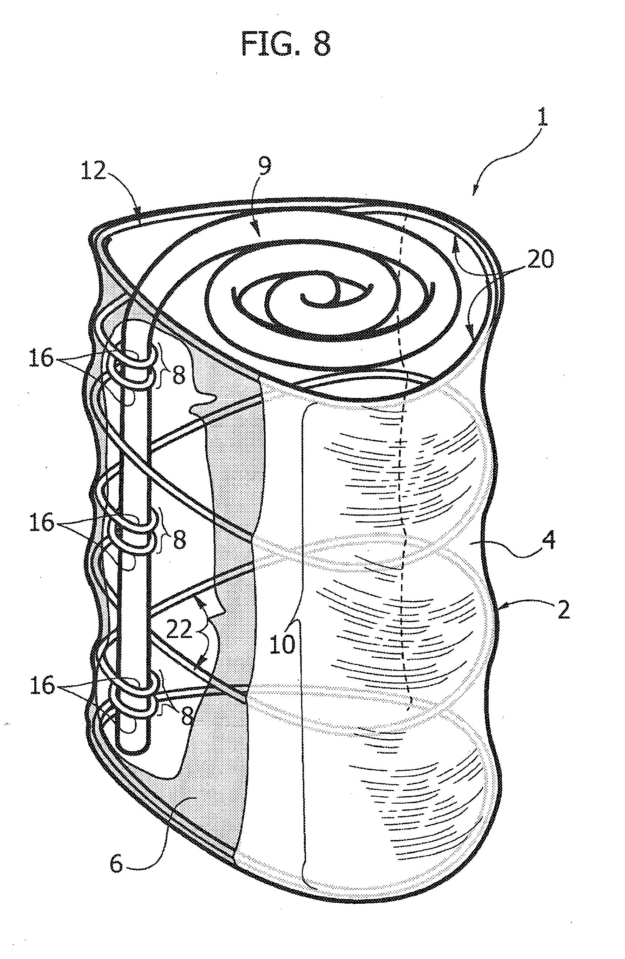

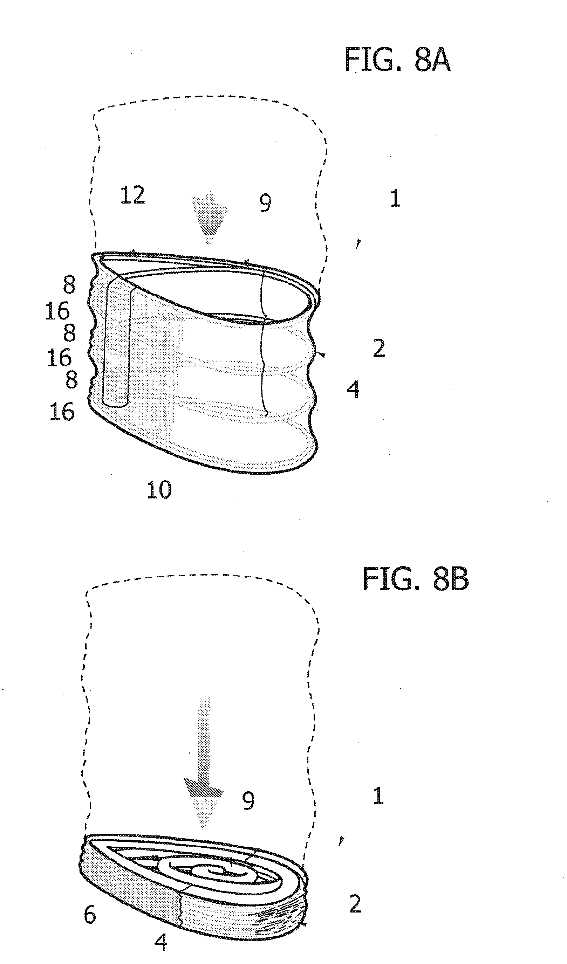

The tubular body 2 is deformable from a contracted position, illustrated for example in figure 8B, to at least one deployed position, for example illustrated in figure 8 or in figure 1. In the position illustrated in figures 1, 8, the deployment occurred rectilinearly.

With reference to figures 8, 8A, 8B, the solar collector 1 can be deployed and collapsed easily and quickly due to the support structure 10.

The support structure 10 is thus deformable from a collapsed position associated to the contracted position of the tubular body 2 and an extended position associated to the deployed position thereof. The deformable tubular body 2 is not self supporting, thus the support structure 10 determines the contracted or deployed position through, respectively, its own collapse or extension.

The abovementioned figures 8, 8A, 8B actually illustrate a collapse sequence of the solar collector 1, which, carried out in a reverse order with respect to the cited order of the figures, can represent a deployment sequence.

Deployment occurs in a simple and quick manner, given that the wire-like element 12 which is helically wound is elastically biased towards the extended position illustrated in figure 8. Furthermore, it should be observed that during the deployment and collapsing operations, the absorber device 9 can remain within the solar collector 1 and be folded, for example spirally, to be contained within the solar collector 1 even when the latter is in the collapsed (figure 8B) or partly collapsed (figure 8A) configuration.

With reference to figure 4, when the solar collector 1 is deployed as illustrated in figure 8 or in figure 1, it can be laid on the ground G so that the axis A is preferably aligned along an east-west direction. The inclination of the solar collector 1 is further adjusted by means of, for example, a pair of tensioners 48, 50 fixed to the ground G to track the relative movement of the sun with respect to the Earth and better intercept sunlight over the day.

The solar collector 1 is placed on the ground G in correspondence of the internally reflecting portion 6, so as to have the transparent portion 4 directly facing the sunlight, indicated with S in figure 4.

Sunlight S traverses the transparent portion 4 hitting the internally reflecting portion 6, which, due to the parabolic profile of the stretch 22 concentrates the reflected light at the solar absorber device 9.

Thus, the energy transmitted by the sunlight S is concentrated on the absorber device 9, in any of the embodiments presented in figures 5 to 7.

In particular, when it is desired to exploit the energy transmitted by sunlight S to heat a given amount of water, an absorber device 9 of the type illustrated in figure 5 will be used. In such case, the rays reflected thereon and concentrated due to the parabolic profile of the stretch 22 traverse the transparent outer polymeric layer 24, the selective absorption coating 28 and penetrate into the inner layer 26 heating the water contained in the channel 30.

According to the type of the selective coating 28 it is furthermore possible to select the frequencies of the sunlight S desired to be transmitted to the inner layer 26 to heat the water contained in the channel 30

In case it is desired to obtain electric energy from the conversion of the energy transmitted by the sunlight S, an absorber 9 of the type illustrated in figure 6, in which the conversion of electric energy occurs due to the photovoltaic cells 32, is used. The material the extruded hemi-cylinders 34, 36 are made of is selected so that the refractive index thereof maximizes the concentration of sunlight S on the cells 32.

In this case, the solar rays concentrated on the absorber 9 traverse the two hemi-cylinders 34, 36 and hit the photovoltaic cells 32.

Furthermore, it should be observed that having a double array of photovoltaic cells 32 opposite to each other, as described previously, enables exploiting the geometry of the absorber device 9 to the utmost.

Lastly, in case it is desired to simultaneously convert the energy transmitted by the sunlight S into thermal and electric energy, an absorber 9 of the type illustrated in figure 7 is used, in which the arrays 44 of photovoltaic cells 46 receive the reflected rays of sunlight S, concentrated on the absorber 9, which traverse the flexible tubular element 38 and the water contained in the parallel channels 40, that is heated.

Furthermore, the water shields the photovoltaic cells 46 against the frequencies in the infrared spectrum actually lowering the operating temperature thereof.

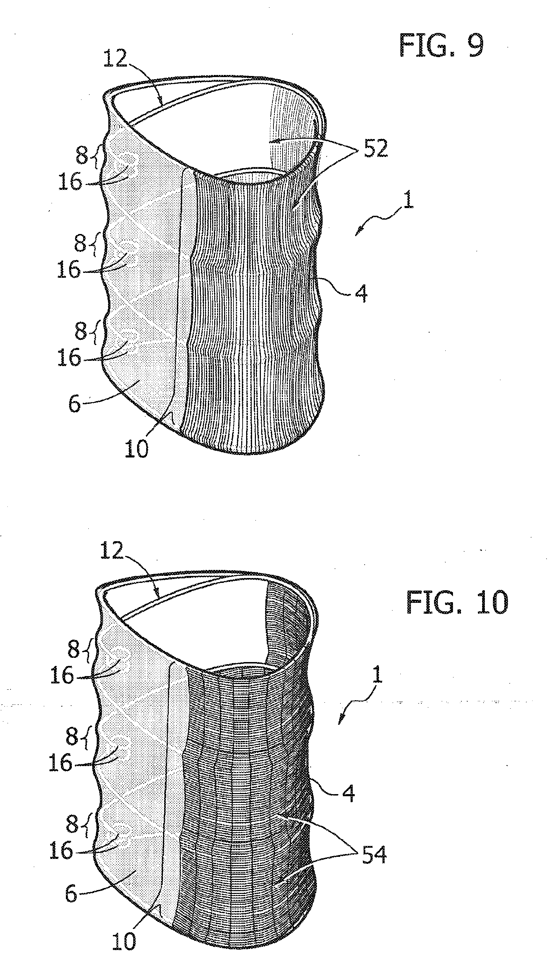

Further advantages and embodiments of the solar collector 1 are illustrated in figures 9, 10.

In the solar collectors 1 illustrated in figures 9, 10 one or more linear diverging Fresnel lenses having different orientation were applied inside the transparent portion 4 . In particular, the transparent portion 4 of the solar collector 1 illustrated in figure 9 comprises one or more Fresnel lenses 52 of linear, diverging type and oriented longitudinally with respect to the tubular body 2, while the transparent portion 4 of the solar collector 1 illustrated in figure 10 comprises one or more Fresnel lenses 54 linear, diverging and oriented transversely with respect to the tubular body 2. The meaning of the terms "longitudinally" and "transversely" derives from the definition used to identify the longitudinal and transverse direction.

The use of diverging Fresnel lenses 52, 54 enables widening the angle of acceptance of sunlight S of the collector 1, thus increasing the amount of energy hitting the solar absorber device 9 inserted therein.

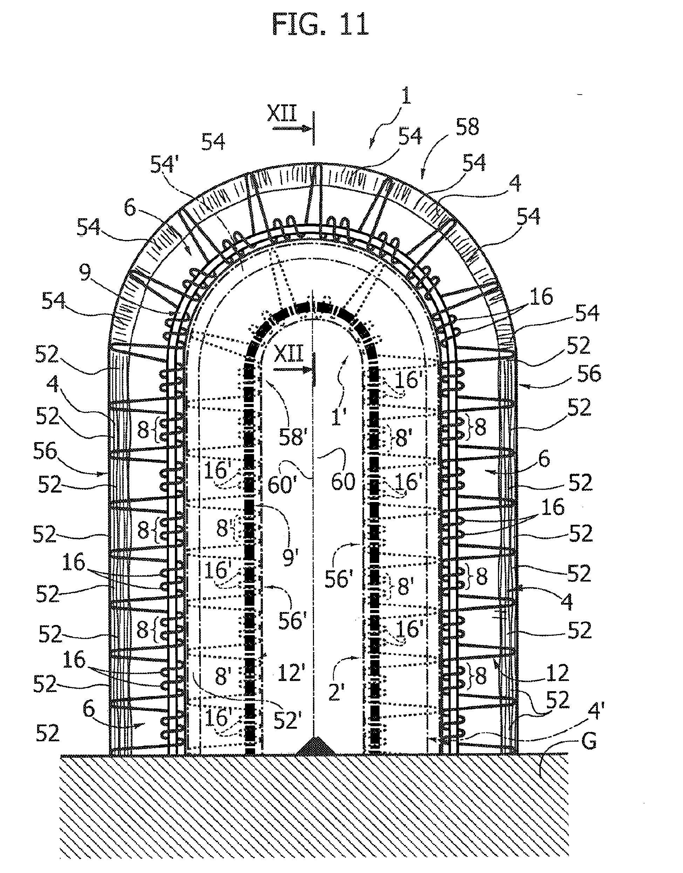

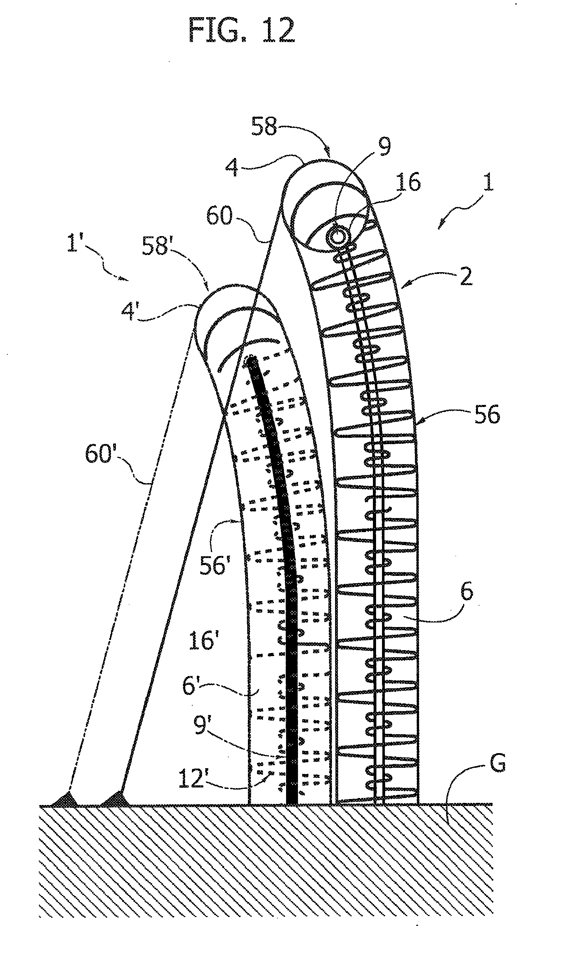

With reference to figures 11, 12, the solar collector 1 can be conveniently deployed in an arc configuration, particularly useful when there arises the need of installing a solar field, i.e. an array of solar collectors with organized arrangement.

In this case, each solar collector 1 has a markedly accentuated longitudinal development with the aim of enabling deployment in an extended configuration envisaging the definition of an arc-profile comprising a pair of columns 56 and a vault 58. Both in correspondence of the columns 56 and in correspondence of the vault 58, the solar collector 1 has the transparent portion 4 facing outside so as to intercept sunlight S. A second solar collector 1' structurally identical to the solar collector 1 (the components identical to the collector 1 have the same reference number followed by an apex) but having a smaller longitudinal development, can be deployed - still arc-configured - so as to copy the profile comprised between the columns 56 and the vault 58 and having, in turn, columns 56' and a vault 58'.

This allows overcoming the mutual shading drawback typical of solar fields using photovoltaic panels, which - at given times of the day - can mutually shade each other due to the inclination of the solar rays.

In this case instead, the solar collector 1' is positioned in a spatial region which, copying the profile of the region comprised between the columns 56 and the vault 58, cannot be subjected to a shading of any type given that it is substantially a free region.

Each solar collector 1, 1' can be conveniently provided with at least one tensioner 60, 60' for orienting the vaults 58, 58' so as to optimally intercept sunlight S at different times of the day. Should the solar collectors 1 be used for installing a permanent solar field, it is convenient to actuate the tensioner through automatic means such as, for example, a servomotor (not illustrated).

Should the solar collector 1 be deployed in arc configuration as illustrated in figures 11, 12, the use of the Fresnel lenses is particularly advantageous but they should be directed differently according to the part of the arc on which it is mounted.

In particular, the solar collector 1 is configured as illustrated in figure 9, with the Fresnel lenses 52 oriented longitudinally at each column 56, while the vault 58 shall be provided having the Fresnel lenses 54 oriented transversely as illustrated in figure 10. Same case applies to the columns 56' and to the vault 58' of the solar collector 1'.

This allows adapting the orientation of the Fresnel lenses to the arc-structure obtainable using the solar collectors 1, 1', hence optimally exploiting the solar radiation S hitting thereon.

The performance of each solar collector 1 deployed in arc configuration can be compared to that of solar or photovoltaic panels having the same reception area but the cost of the solar collector 1 is considerably lower.

Obviously, the construction details and the embodiments may widely vary with respect to what has been described and illustrated without departing from the scope of protection of the present invention, as defined by the attached claims.

## Claims

1. A solar collector (1) comprising:
- a deformable tubular body (2) including a transparent portion (4) and an internally reflecting portion (6), said tubular body (2) being deformable from a contracted position to at least one deployed position,
- support means (8; 16, 18) adapted to receive a solar absorber device (9), and
- a support structure (10) inserted within said deformable tubular body (2),
wherein
- said support structure (10) comprises a wire-like element (12) which is helically wound in a plurality of turns (14) and fixed to said deformable tubular body (2),
- said support structure (10) is deformable from a collapsed position associated to said contracted position and an extended position associated to said deployed position of said deformable tubular body (2),
the solar collector (1) being **characterised in that** said wire-like element (12) which is helically wound is elastically biased towards said extended position.

2. The solar collector (1) according to claim 1, **characterised in that** it comprises a solar absorber device (9) received on said support means (8; 16, 18) and including a body (24, 26; 34, 36; 38) elongated in a longitudinal direction of said deformable tubular body (2) and arranged within said deformable tubular body (2) in proximity of said internally reflecting portion (6).

3. The solar collector (1) according to claim 1, **characterised in that** the turns (14) of said support structure (10) are wound according to a variable curvature profile.

4. The solar collector (1) according to claim 3, **characterised in that** said variable curvature profile comprises a first circular stretch (20) associated to said transparent portion (4), and a second stretch (22) having a parabolic profile associated to said internally reflecting portion (6).

5. The solar collector (1) according to claim 1 **characterised in that** said wire-like element (12) defines said support means (8; 16), said support means being turns with reduced diameter (16) coaxial to each other and alternated to said turns (14), said turns with reduced diameter (16) being located in proximity of said internally reflecting portion (6).

6. The solar collector (1) according to claim 1, **characterised in that** said support means (8;18) comprise eyelets (18) coaxial to each other and fixed to said turns (14), said eyelets (18) being located in proximity of said internally reflecting portion (6).

7. The solar collector (1) according to claim 1, **characterised in that** said transparent portion (4) comprises at least one transversely oriented linear diverging Fresnel lens (52).

8. The solar collector (1) according to claim 1, **characterised in that** said transparent portion (4) comprises at least one longitudinally oriented linear diverging Fresnel lens (54).

9. The solar collector (1) according to claim 2, **characterised in that** said solar absorber device (9; 24, 26, 28, 30) comprises a flexible multilayer tubular element including a transparent outer polymeric layer (24) and an aluminium inner layer (26) a selective absorption coating (28) interposed therebetween, wherein said inner layer (26) defines a channel (30) adapted to contain water or other fluid, said solar absorber device (9; 24, 26, 28, 30) further being carried by said support means (8; 16; 18) within said solar collector (1) and being deformable therewith.

10. The solar collector (1) according to claim 2, **characterised in that** said solar absorber device (9; 32, 34, 36) comprises a plurality of photovoltaic cells (32) which are interposed between two extruded hemi-cylinders (34, 36) made of flexible and transparent polymeric material, said solar absorber device (9) being furthermore carried by said support means (8; 16; 18) within said solar collector (1) and being deformable therewith.

11. The solar collector (1) according to claim 2, **characterised in that** said solar absorber device (9; 38, 40, 42, 44, 46)) comprises a flexible tubular element (38) having an interior subdivided into a crown of parallel channels (40) defining a further central channel (42), wherein said parallel channels (40) are adapted to contain water or other fluid, and wherein said central channel (42) houses a plurality of arrays (44) of photovoltaic cells (46), said solar absorber device (9; 38, 40, 42, 44, 46) being furthermore carried by said support means within said solar collector (1) and being deformable therewith.

12. Solar collector (1) according to claim 1, **characterised in that** said at least one deployed position of said deformable tubular body is a linearly deployed position

13. Solar collector (1) according to claim 1, **characterised in that** said at least one deployed position of said deformable tubular body is an arc-wise deployed position comprising two columns (56) and a vault (58).

14. Solar collector (1) according to claim 13, **characterised in that** said columns (56) and said vault (58) comprise respective transparent and internally reflecting portions, wherein said transparent portion comprises at least one Fresnel lens (52) in correspondence of said columns (56) and at least one Fresnel lens (54) in correspondence of said vault (58).

## Patentansprüche

1. Solarkollektor (1), umfassend:
einen verformbaren rohrförmigen Körper (2), der einen transparenten Abschnitt (4) und einen innen reflektierenden Abschnitt (6) beinhaltet, wobei der rohrförmige Körper (2) aus einer zusammengezogenen Position in wenigstens eine einsatzbereite Position verformbar ist,
Haltemittel (8; 16,18), die zum Aufnehmen einer Solarabsorbervorrichtung (9) ausgelegt sind, und
eine Haltestruktur (10), die innerhalb des verformbaren rohrförmigen Körpers (2) eingeführt ist,
wobei die Haltestruktur (10) ein drahtartiges Element (12) umfasst, das spiralartig in einer Mehrzahl von Windungen (14) gewickelt und an dem verformbaren rohrförmigen Körper (2) fixiert ist,
wobei die Haltestruktur (10) aus einer zusammengeklappten Position, die der zusammengezogenen Position zugeordnet ist, und einer auseinandergeklappten Position, die der einsatzbereiten Position des verformbaren rohrförmigen Körpers (2) zugeordnet ist, verformbar ist,
wobei der Solarkollektor (1) **dadurch gekennzeichnet ist, dass** das spiralartig gewundene drahtartige Element (12) elastisch hin zu der auseinandergeklappten Position vorgespannt ist.

2. Solarkollektor nach Anspruch (1) nach Anspruch 1, **dadurch gekennzeichnet, dass** er eine Solarabsorbervorrichtung (9) umfasst, die an den Haltemitteln (8; 16, 18) aufgenommen ist und einen Körper (24, 26; 34, 36; 38) beinhaltet, der sich in einer Längsrichtung des verformbaren rohrförmigen Körpers (2) längserstreckt und innerhalb des verformbaren rohrförmigen Körpers (2) in der Umgebung des innen reflektierenden Abschnittes (6) angeordnet ist.

3. Solarkollektor (1) nach Anspruch 1, **dadurch gekennzeichnet, dass** die Windungen (14) der Haltestruktur (10) entsprechend einem Profil mit veränderlicher Krümmung gewickelt sind.

4. Solarkollektor (1) nach Anspruch 3, **dadurch gekennzeichnet, dass** das Profil mit veränderlicher Krümmung ein erstes kreisförmiges Teilstück (20), das dem transparenten Abschnitt (4) zugeordnet ist, und ein zweites transparentes Teilstück (22) mit einem parabolischen Profil, das dem innen reflektierenden Abschnitt (6) zugeordnet ist, umfasst.

5. Solarkollektor (1) nach Anspruch 1, **dadurch gekennzeichnet, dass** das drahtartige Element (12) Haltemittel (8; 16) definiert, wobei die Haltemittel Windungen mit verringertem Durchmesser (16) sind, die koaxial zueinander sind und sich mit den Windungen (14) abwechseln, wobei die Windungen mit verringertem Durchmesser (16) in der Umgebung des innen reflektierenden Abschnittes (6) befindlich sind.

6. Solarkollektor (1) nach Anspruch 1, **dadurch gekennzeichnet, dass** die Haltemittel (8; 18) Ösen (18) umfassen, die koaxial zueinander und an den Windungen (14) fixiert sind, wobei die Ösen (18) in der Umgebung des innen reflektierenden Abschnittes (6) befindlich sind.

7. Solarkollektor (1) nach Anspruch 1, **dadurch gekennzeichnet, dass** der transparente Abschnitt (4) wenigstens eine querläufig orientierte, lineare divergierende FresnelLinse (52) umfasst.

8. Solarkollektor (1) nach Anspruch 1, **dadurch gekennzeichnet, dass** der transparente Abschnitt (4) wenigstens eine längsläufig orientierte, lineare divergierende FresnelLinse (54) umfasst.

9. Solarkollektor (1) nach Anspruch 2, **dadurch gekennzeichnet, dass** die Solarabsorbervorrichtung (9; 24, 26, 28, 30) ein flexibles, mehrschichtiges, rohrförmiges Element umfasst, das eine transparente äußere Polymerschicht (24) und eine innere Aluminiumschicht (26) sowie eine dazwischen angeordnete Selektivabsorptionsbeschichtung (28) beinhaltet, wobei die innere Schicht (26) einen Kanal (30) definiert, der dafür ausgelegt ist, Wasser oder ein anderes Fluid zu enthalten, wobei die Solarabsorbervorrichtung (9; 24, 26, 28, 30) des Weiteren von den Haltemitteln (8; 16; 18) innerhalb des Solarkollektors (1) gestützt und verformbar damit ist.

10. Solarkollektor (1) nach Anspruch 2, **dadurch gekennzeichnet, dass** die Solarabsorbervorrichtung (9; 32, 34, 36) eine Mehrzahl von Fotovoltaikzellen (32) umfasst, die zwischen zwei extrudierten Halbzylindern (34, 36) angeordnet sind, die aus flexiblem und transparentem Polymermaterial bestehen, wobei die Solarabsorbervorrichtung (9) darüber hinaus von den Haltemitteln (8; 16; 18) innerhalb des Solarkollektors (1) gestützt und verformbar damit ist.

11. Solarkollektor (1) nach Anspruch 2, **dadurch gekennzeichnet, dass** die Solarabsorbervorrichtung (9; 38, 40, 42, 44, 46) ein flexibles rohrförmiges Element (38) mit einem Inneren umfasst, das in einen Kranz von parallelen Kanälen (40) unterteilt ist, die einen weiteren zentralen Kanal (42) definieren, wobei die parallelen Kanäle (40) dafür ausgelegt sind, Wasser oder ein anderes Fluid zu enthalten, und wobei der zentrale Kanal (42) eine Mehrzahl von Feldanordnungen (44) von Fotovoltaikzellen (46) beherbergt, wobei die Solarabsorbervorrichtung (9; 38, 40, 42, 44, 46) des Weiteren von dem Haltemittel innerhalb des Solarkollektors (1) gestützt und verformbar damit ist.

12. Solarkollektor (1) nach Anspruch 1, **dadurch gekennzeichnet, dass** die wenigstens eine einsatzbereite Position des verformbaren rohrförmigen Körpers eine lineare einsatzbereite Position ist.

13. Solarkollektor (1) nach Anspruch 1, **dadurch gekennzeichnet, dass** die wenigstens eine einsatzbereite Position des verformbaren rohrförmigen Körpers eine bogenförmige einsatzbereite Position ist, die zwei Säulen (56) und einen Wölbteil (58) umfasst.

14. Solarkollektor (1) nach Anspruch 13, **dadurch gekennzeichnet, dass** die Säulen (56) und der Wölbteil (58) jeweilige transparente und innen reflektierende Abschnitte umfassen, wobei der transparente Abschnitt wenigstens eine Fresnel-Linse (52) entsprechend den Säulen (56) und wenigstens eine Fresnel-Linse (54) entsprechend dem Wölbteil (58) umfasst.

## Revendications

1. Collecteur solaire (1) comprenant :
un corps tubulaire déformable (2) comportant une partie transparente (4) et une partie à réflexion interne (6), ledit corps tubulaire (2) pouvant se déformer depuis une position contractée vers au moins une position déployée,
des moyens de support (8 ; 16, 18) adaptés pour recevoir un dispositif d'absorption solaire (9), et
une structure de support (10) insérée dans ledit corps tubulaire déformable (2),
dans lequel
ladite structure de support (10) comprend un élément en forme de fil (12) qui est enroulé de manière hélicoïdale en une pluralité de spires (14) et fixé audit corps tubulaire déformable (2),
ladite structure de support (10) peut se déformer depuis une position aplatie associée à ladite position contractée vers une position étendue associée à ladite position déployée dudit corps tubulaire déformable (2),
le collecteur solaire (1) étant **caractérisé en ce que** ledit élément en forme de fil (12), qui est enroulé de manière hélicoïdale, est élastiquement sollicité vers ladite position étendue.

2. Collecteur solaire (1) selon la revendication 1, **caractérisé en ce qu'**il comprend un dispositif d'absorption solaire (9) reçu sur lesdits moyens de support (8 ; 16, 18) et comportant un corps (24, 26 ; 34, 36 ; 38) allongé dans une direction longitudinale dudit corps tubulaire déformable (2) et agencé à l'intérieur dudit corps tubulaire déformable (2) à proximité de ladite partie à réflexion interne (6).

3. Collecteur solaire (1) selon la revendication 1, **caractérisé en ce que** les spires (14) de ladite structure de support (10) sont enroulées selon un profil de courbure variable.

4. Collecteur solaire (1) selon la revendication 3, **caractérisé en ce que** ledit profil de courbure variable comprend une première portion circulaire (20) associée à ladite partie transparente (4), et une deuxième portion (22) ayant un profil parabolique associée à ladite partie à réflexion interne (6).

5. Collecteur solaire (1) selon la revendication 1, **caractérisé en ce que** ledit élément en forme de fil (12) définit lesdits moyens de support (8 ; 16), lesdits moyens de support étant des spires de diamètre réduit (16) coaxiales les unes avec les autres et disposées en alternance avec lesdites spires (14), lesdites spires de diamètre réduit (16) étant situées à proximité de ladite partie à réflexion interne (6).

6. Collecteur solaire (1) selon la revendication 1, **caractérisé en ce que** lesdits moyens de support (8 ; 18) comprennent des oeillets (18) coaxiaux les uns avec les autres et fixés auxdites spires (14), lesdits oeillets (18) étant situés à proximité de ladite partie à réflexion interne (6).

7. Collecteur solaire (1) selon la revendication 1, **caractérisé en ce que** ladite partie transparente (4) comprend au moins une lentille de Fresnel divergente linéaire orientée transversalement (52).

8. Collecteur solaire (1) selon la revendication 1, **caractérisé en ce que** ladite partie transparente (4) comprend au moins une lentille de Fresnel divergente linéaire orientée longitudinalement (54).

9. Collecteur solaire (1) selon la revendication 2, **caractérisé en ce que** ledit dispositif d'absorption solaire (9 ; 24, 26, 28, 30) comprend un élément tubulaire multicouche flexible comportant une couche polymère externe transparente (24), une couche interne d'aluminium (26) et un revêtement d'absorption sélective (28) interposé entre elles,
où ladite couche interne (26) définit un canal (30) adapté pour contenir de l'eau ou un autre fluide, ledit dispositif d'absorption solaire (9 ; 24, 26, 28, 30) étant en outre supporté par lesdits moyens de support (8 ; 16 ; 18) à l'intérieur dudit collecteur solaire (1) et étant déformable avec celui-ci.

10. Collecteur solaire (1) selon la revendication 2, **caractérisé en ce que** ledit dispositif d'absorption solaire (9 ; 32, 34, 36) comprend une pluralité de cellules photovoltaïques (32) qui sont interposées entre deux hémi-cylindres extrudés (34, 36) réalisés en un matériau polymère flexible et transparent, ledit dispositif d'absorption solaire (9) étant en outre supporté par lesdits moyens de support (8 ; 16 ; 18) à l'intérieur dudit collecteur solaire (1) et étant déformable avec celui-ci.

11. Collecteur solaire (1) selon la revendication 2, **caractérisé en ce que** ledit dispositif d'absorption solaire (9 ; 38, 40, 42, 44, 46) comprend un élément tubulaire flexible (38) ayant une partie intérieure subdivisée en une couronne de canaux parallèles (40) définissant un canal central supplémentaire (42), où lesdits canaux parallèles (40) sont adaptés pour contenir de l'eau ou un autre fluide, et où ledit canal central (42) reçoit une pluralité de réseaux (44) de cellules photovoltaïques (46), ledit dispositif d'absorption solaire (9 ; 38, 40, 42, 44, 46) étant en outre supporté par lesdits moyens de support à l'intérieur dudit collecteur solaire (1) et étant déformable avec celui-ci.

12. collecteur solaire (1) selon la revendication 1, **caractérisé en ce que** ladite au moins une position déployée dudit corps tubulaire déformable est une position déployée linéairement.

13. Collecteur solaire (1) selon la revendication 1, **caractérisé en ce que** ladite au moins une position déployée dudit corps tubulaire déformable est une position déployée en forme d'arc comprenant deux colonnes (56) et une voûte (58).

14. Collecteur solaire (1) selon la revendication 13, **caractérisé en ce que** lesdites colonnes (56) et ladite voûte (58) comprennent une partie transparente et une partie à réflexion interne respectives, où ladite partie transparente comprend au moins une lentille de Fresnel (52) en correspondance avec lesdites colonnes (56) et au moins une lentille de Fresnel (54) en correspondance avec ladite voûte (58).
